# EUROPÄISCHE PATENTANMELDUNG

(11) **EP 0 894 959 A2**
(43) Veröffentlichungstag der Anmeldung: **03.02.1999**
(21) Anmeldenummer: 98114515.4
(22) Anmeldetag: 03.08.1998
(51) Int. Cl.: F02D 19/02

(54) **Vorsteuerwertekorrektur bei Brennkraftmaschinen**

(30) Priorität: 02.08.1997 DE 19733575
(71) Anmelder: Mannesmann VDO Aktiengesellschaft, 60388 Frankfurt am Main (DE)
(72) Erfinder: Neugärtner, Jörg, 53840 Troisdorf (DE)
(74) Vertreter: Rassler, Andrea, Dipl.-Phys.

(57) **Zusammenfassung**

Das Verfahren betrifft die Korrektur von Vorsteuerwerten bei gasbetriebenen Brennkraftmaschinen in Abhängigkeit von der Gaszusammensetzung. Bisher war es zur Vermeidung von Motorschäden notwendig, bei Änderung der Gasqualität den Motor zumindest vorübergehend mit ungünstigen Vorsteuerwerten zu betreiben. Bei dem neuen Verfahren wird mit wenigstens einem Halbleitersensor wenigstens ein Leitbestandteil des Gases kontinuierlich quantitativ erfaßt und die Vorsteuerwerte werden entsprechend der Quantität wenigstens dieses Leitbestandteils fortlaufend optimiert. Das Verfahren erlaubt zu jedem Zeitpunkt ein Betreiben der Maschinen mit optimalen Vorsteuerwerten, wodurch sich hohe Leistungen bei optimalen Verbrennungsabläufen realisieren lassen.

## Beschreibung

Die Erfindung befaßt sich mit einem Verfahren zur Korrektur von Vorsteuerwerten bei einer gasbetriebenen Brennkraftmaschine, zum Beispiel für deren Zündung und Einspritzanlage, in Abhängigkeit von der Zusammensetzung des verfeuerten Gases.

Im Gegensatz zu den genormten Benzinsorten, die bei ihrer Raffinierung genau definierte Eigenschaften erhalten, besteht beim Betrieb von Brennkraftmaschinen mit komprimiertem Erdgas (CNG-Betrieb) das Problem, daß das Gas je nach Ursprungsart oder - bei synthetisch erzeugtem Gas - je nach Syntheseverfahren unterschiedliche Zusammensetzungen und damit unterschiedliche Brennwerte aufweist. Eine Optimierung der Kennfelder der Brennkraftmaschine insbesondere bezüglich des Zündzeitpunktes und der Einspritzmenge im Hinblick auf eine einzige, bestimmte Gasqualität ist aus diesem Grund nicht sinnvoll. Allein in Deutschland wird neben dem hochkalorischen Rußlandgas (H1), von dem auch diverse Untersorten existieren, das ebenfalls hochkalorische Nordseegas (H2), aber auch niederkalorisches, synthetisches Gas (L) angeboten. Diese Gasqualitäten unterscheiden sich in ihrer Zusammensetzung, wobei insbesondere der Methangasanteil zwischen ca. 85 und 98 % schwankt. Dies führt zu unterschiedlichen Brennwerten der einzelnen Gasqualitäten. Werden die abweichenden Brennwerte der verschiedenen Gasqualitäten bei den Vorsteuerwerten einer Brennkraftmaschine nicht berücksichtigt, kann es zu Schäden am Motor oder an der Abgasreinigungsanlage kommen, weil beispielsweise die Verbrennungstemperatur bei einer Gemischabmagerung stark ansteigt.

Eine heute übliche Lösung des Problems besteht darin, daß die Bedienperson (der Fahrer eines Fahrzeuges) die getankte Gasqualität an einem Schalter am Armaturenbrett einstellt und dementsprechend optimierte Kennfelder für die Vorsteuerwerte des Motors aufgerufen werden. Dabei kann es jedoch sehr leicht zu Bedienungsfehlern durch den Fahrer kommen. Zwar ist es möglich, mit Hilfe der bei Fahrzeugen mit Abgaskatalysator vorhandenen Lambdasonde Fehleingaben zu erkennen und auszuregeln, jedoch kann dieser Regelvorgang einige Sekunden in Anspruch nehmen, die bereits zu einer erheblichen Schädigung des Motors führen.

Besonders kritisch ist die Situation bei Fahrzeugen, die wahlweise mit Gas oder Benzin betrieben werden können, da bei diesen Fahrzeugen auch während des Betriebs eine stufenlose Umschaltung von Benzin- auf Gasbetrieb und umgekehrt erfolgen kann, beispielsweise in Abhängigkeit vom Tankfüllstand. Bei heißem Motor besteht insbesondere für den Katalysator bei einer Umschaltung unter hoher Last die Gefahr, daß die Abgastemperatur durch ungünstige Gas/Luft-Gemische erheblich ansteigt, was zu einer Zerstörung des Katalysators führen kann. Als Präventivmaßnahme wird deshalb eine besondere Passivierung (Beschichtung) des Katalysators vorgenommen, die jedoch sehr teuer und aufwendig ist.

Eine weitere Vorsorgemaßnahme als Schutz vor Motorüberhitzung besteht darin, bei Vollast den Zündzeitpunkt in Richtung "Spät" zu verstellen, bis die Gemischbildung mit Hilfe der Lambdasonde optimiert werden kann. Zwar ermöglicht die hohe Klopffestigkeit von Gas grundsätzlich einen sehr frühen Zündzeitpunkt, durch die Verschiebung des Zeitpunktes in Richtung "Spät" läßt sich jedoch die Abgastemperatur wegen des dann ungünstigeren Verbrennungsverlaufs senken, womit einer unkontrollierten Erhöhung der Abgastemperatur infolge von Gemischabmagerung entgegengewirkt werden kann. Problematisch hierbei ist, daß durch die vorsorgliche Verstellung des Zündzeitpunktes erhebliche Leistungseinbußen auftreten, die den Fahrer verunsichern und beispielsweise während eines Überholmanövers auch negativen Einfluß auf die Verkehrssicherheit haben kann.

Ein weiteres Problem besteht darin, daß es bei einer Nachbetankung aufgrund des Restgases im Tank, das wegen des notwendigen Mindestbetriebdruckes im Tank von bis zu einigen Bar zwangsläufig vorhanden ist, zu einer neuen, undefinierten Gasqualität kommen kann für die kein geeignetes Kennfeld für die Vorsteuerwerte zur Verfügung steht. In diesem Fall ist keine optimale Einstellung der Vorsteuerwerte möglich, sondern es muß mit vorsorglich besonders sicheren Vorsteuerwerten gearbeitet werden, was einen Leistungsverlust, Verbrauchsnachteile und eine verschlechterte Abgasqualität zur Folge hat.

Der Erfindung liegt die Aufgabe zugrunde, ein Verfahren zur Korrektur der Vorsteuerwerte einer Brennkraftmaschine zu schaffen, das eine kontinuierliche, verzögerungsfreie Anpassung der Vorsteuerwerte an die Zusammensetzung des Antriebsgases ermöglicht.

Erfindungsgemäß wird die Aufgabe durch ein Verfahren der eingangs beschriebenen Art gelöst, bei welchem mit Hilfe wenigstens eines Sensors insbesondere auf Halbleiterbasis wenigstens ein Leitbestandteil des zu verfeuernden Gases kontinuierlich qualitativ erfaßt wird und entsprechend der Quantität wenigstens dieses Leitbestandteils die Vorsteuerwerte rechnerisch oder anhand abgespeicherter Kennfelder fortlaufend optimiert werden. Mit Hilfe von Halbleitersensoren auf zum Beispiel Siliciumbasis, die über für bestimmte Gasanteile sensitive Siliciumarrays verfügen, ist eine kontinuierliche und sehr schnell ansprechende Bestimmung von Gasanteilen möglich, so daß die Vorsteuerwerte für die betreffende Brennkraftmaschine schnell an die verfeuerte Gasqualität anpaßbar sind. Die Maschine kann immer mit optimierten Vorsteuerwerten betrieben werden, so daß bei maximaler Leistung und optimiertem Verbrauch eine Schädigung des Motors und/oder der Abgasreinigungsanlage ausgeschlossen ist. Das manuelle Einstellen der Gassorte durch den Fahrer entfällt. Anstelle von Halbleitersensoren auf zum Beispiel Siliciumbasis sind weiterhin auch Dickschichtarrays denkbar.

Wie eingangs bereits erwähnt, bestimmt sich die Qualität des zu verfeuernden Gase im wesentlichen durch ihren Methangasanteil. Bereits allein die Bestimmung des Methangasanteils läßt hinreichende Rückschlüsse auf die tatsächlich im Tank befindliche Gasqualität zu. In vorteilhafter Ausgestaltung des Verfahrens werden weitere Gasanteile, zum Beispiel Ethan, Propan und/oder weitere Bestandteile erfaßt, wodurch neben den bereits erwähnten, in Deutschland erhältlichen Gassorten auch Gemische dieser Gase besser detektiert werden können und eine weitergehende Optimierung der Vorsteuerwerte der Brennkraftmaschine erfolgen kann.

In Weiterbildung der Erfindung werden Kennfelder für die Vorsteuerzeiten bei bestimmten Gasanteilen abgespeichert, die den bekannten Gassorten entsprechen, und gegebenenfalls werden bei davon abweichenden, ermittelten Gasanteilen die Vorsteuerwerte durch Interpolation aus den abgespeicherten Werten ermittelt. Durch diese Maßnahme wird der Programmieraufwand für die Durchführung des Verfahrens erheblich verringert, zumal es durch das Mischen einzelner Gassorten zu einer nahezu beliebigen Anzahl von Gasgemischen kommen kann.

Statt der unmittelbaren Zuordnung von Vorsteuerwerten zu den ermittelten Gasanteilen mit Hilfe vorher abgespeicherter Kennfelder ist es auch denkbar, zunächst aus der ermittelten Zusammensetzung des zu verfeuernden Gases auf dessen Brennwert zu schließen und die Vorsteuerwerte der Maschine entsprechend dem ermittelten Brennwert rechnerisch oder anhand abgespeicherter Kennfelder zu optimieren.

Dieser Vorgehensweise bei der Korrektur der Vorsteuerwerte liegt die Erkenntnis zugrunde, daß die für die Verbrennung in einer Brennkraftmaschine wichtigste Eigenschaft eines Gases dessen Brennwert ist. Es ist daher möglich, Kennfelder für die Vorsteuerwerte lediglich in Abhängigkeit vom Brennwert des zu verfeuernden Gases abzuspeichern. Die Bestimmung des Brennwertes des im Tank befindlichen Gases kann entweder durch Zurückgreifen auf abgespeicherte Kennlinien erfolgen, die den Brennwert in Abhängigkeit beispielsweise vom Methangasanteil aufzeigen.

In Weiterbildung der Erfindung wird der Brennwert des Gases als Summe der stoffmengenbezogenen Brennwerte der einzelnen Gasanteile ermittelt. Je mehr Leitbestandteile des Gases ermittelt werden, desto exakter ist die Bestimmung des Brennwertes. Die Sensoren zur Erfassung der Gasanteile werden vorzugsweise im Fahrzeugtank untergebracht, da ihre dortige Anordnung am einfachsten zu bewerkstelligen ist und bereits unmittelbar nach Tankvorgängen das neue, nun im Tank befindliche Gemisch analysiert werden kann. Grundsätzlich ist es jedoch auch denkbar, die Sensoren in der Zuleitung zum Motor oder unmittelbar in der Einspritzanlage anzuordnen. Auch eine ergänzende Anordnung von Sensoren in diesen Bereichen der Kraftstoffanlage ist denkbar, beispielsweise um nach Tankvorgängen lokale Abweichungen in der Zusammensetzung des Gases erfassen zu können.

Um die Sensitivität der Halbleitersensoren bezüglich bestimmter Gasbestandteile zu verbessern, kann es sinnvoll sein, diese zu beheizen. Die Beheizung der Sensoren im Gastank ist unkritisch, da die verwendeten komprimierten Naturgase oder synthetisch erzeugten Gase erst durch Vermischen mit Luft ein zündfähiges Gemisch bilden und im Gastank keine Luft vorhanden ist.

Selbstverständlich erfolgt eine Korrektur der Vorsteuerwerte der Brennkraftmaschine nicht nur in Abhängigkeit von der Qualität des zu verfeuernden Gases, sondern auch in Abhängigkeit von weiteren Parametern, zum Beispiel der Motordrehzahl, der Motorlast, der Motortemperatur, und so weiter. Neben den bereits erwähnten Vorsteuerwerten für die Zündung und Einspritzanlage können auch weitere Vorsteuerwerte der Brennkraftmaschine, zum Beispiel der Ladedruck bei aufgeladenen Motoren, in Abhängigkeit von der Gasqualität korrigiert und optimiert werden.

Ein bevorzugtes Ausführungsbeispiel der Erfindung, nämlich eine Vorrichtung zur Durchführung des Verfahrens zur Korrektur von Vorsteuerwerten bei einer gasbetriebenen Brennkraftmaschine, ist im folgenden beschrieben und anhand der Figuren erläutert. Die Erfindung ist jedoch nicht auf dieses Ausführungsbeispiel beschränkt.

Es zeigen:
- Figur 1:: eine Vorrichtung zur Durchführung des Verfahrens,
- Figur 2:: einen Ablaufplan zur Durchführung des Verfahrens.

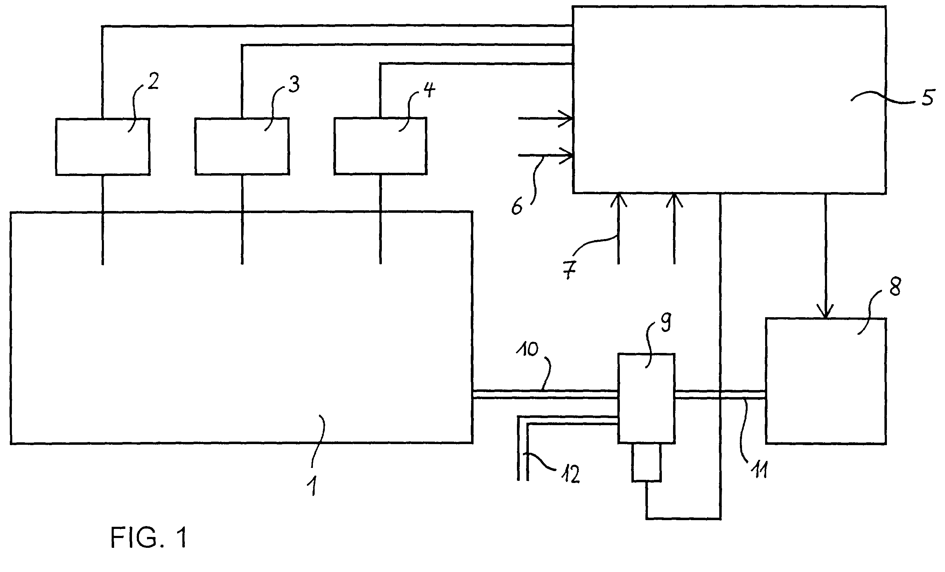

Figur 1 zeigt eine Vorrichtung zur Durchführung des Verfahrens, wobei mit der Bezugsziffer 1 ein Tank, insbesondere eine Gastank, bezeichnet ist. Dieser Tank 1 kann lediglich zur Aufnahme des komprimierten Gases oder auch zur kombinierten Aufnahme von komprimiertem Gas und einem weiteren Brennstoff (wie zum Beispiel Benzin oder Diesel) ausgebildet sein. Ein Gassensor 2, mit Hilfe dessen wenigstens ein Leitbestandteil des verfeuerten Gases kontinuierlich quantitativ erfaßt wird, ein Temperatursensor 3 und ein Drucksensor 4 sind in oder an dem Tank 1 angeordnet und mit einer Steuereinrichtung 5 verbunden. Der Steuereinrichtung 5 können über weitere Eingänge 6 weitere Parameter des Tankes 1 beziehungsweise dessen Peripherie zugeführt werden. So ist es zum Beispiel denkbar, mittels Differenzsensoren eine Dichtigkeitsprüfung des Tankes 1 vorzunehmen.

Die Steuereinrichtung 5 weist weitere Eingänge 7 auf, über die Parameter der Brennkraftmaschine oder deren Peripherie (zum Beispiel Umgebungstemperatur) zugeführt werden können. Als Eingangssignale, die über diese weiteren Eingänge 7 zugeführt werden, sind insbesondere ein Drehzahlsignal und ein Lastsignal denkbar, wobei das Lastsignal beispielsweise aus der Stellung eines die Leistung der Brennkraftmaschine bestimmenden Stellgliedes (zum Beispiel Drosselklappe) abgeleitet wird. In Abhängigkeit der Ausgangssignale des Gassensors 2, des Temperatursensors 3, des Drucksensors 4 und gegebenenfalls der Signale, die über die weiteren Eingänge 6 zugeführt werden und ergänzend dazu abhängig von den Signalen wie Drehzahl oder Last, die über die weiteren Eingänge 7 zugeführt werden, werden ein oder mehrere Ansteuersignale für eine Einspritzeinrichtung 8 von der Steuereinrichtung 5 berechnet. Dies geschieht bei einer mehrzlyndrigen Brennkraftmaschine insbesondere selektiv für jeden einzelnen Zylinder, wozu die Einspritzeinrichtung 8 in entsprechender Weise ausgebildet ist, das heißt, daß für jeden Zylinder Einlaß- und Auslaßventile, Zündkerzen, Einspritzventile und dergleichen vorhanden sind. Dies ist in Figur 1 mittels der Einspritzeinrichtung 8 schematisch angedeutet. Die Kraftstoffzufuhr, insbesondere die Gaszufuhr, von dem Tank 1 zu der Einspritzeinrichtung 8 (und damit in die Brennräume der Zylinder der Brennkraftmaschine) erfolgt über ein Absperrventil 9, wobei das Absperrventil 9 über eine Verbindungsleitung 10 mit dem Tank 1 und über eine weitere Verbindungsleitung 11 mit der Einspritzeinrichtung 8 in Verbindung steht. Denkbar ist hier, daß für jeden Zylinder der Brennkraftmaschine eine eigene Verbindungsleitung und ein eigenes Absperrventil zur Verfügung steht. Das Absperrventil 9 kann von der Steuereinrichtung 5 angesteuert werden, so daß einerseits die Gaszufuhr von dem Tank 1 zu der Einspritzeinrichtung 8 gegeben ist, während andererseits nach Ansteuerung des Absperrventiles 9, wobei die Ansteuerung eine Absperrung in Richtung der Einspritzeinrichtung 8 bewirkt, eine Befüllung des Tankes 1 über eine Befüllungsleitung 12 gegeben ist. Insbesondere aus Sicherheitsgründen wird das Absperrventil 9 auf Befüllung umgeschaltet, wenn festgestellt wird, daß ein solcher Befüllungsvorgang (zum Beispiel durch Öffnen des Tankdeckels oder durch Öffnen der Befüllungsleitung 12) durchgeführt werden soll. Wie die Steuereinrichtung 5 aus den Eingangssignalen die Vorsteuerwerte gewinnt und in entsprechender Weise die Einspritzeinrichtung 8 ansteuert, ist im folgenden beschrieben.

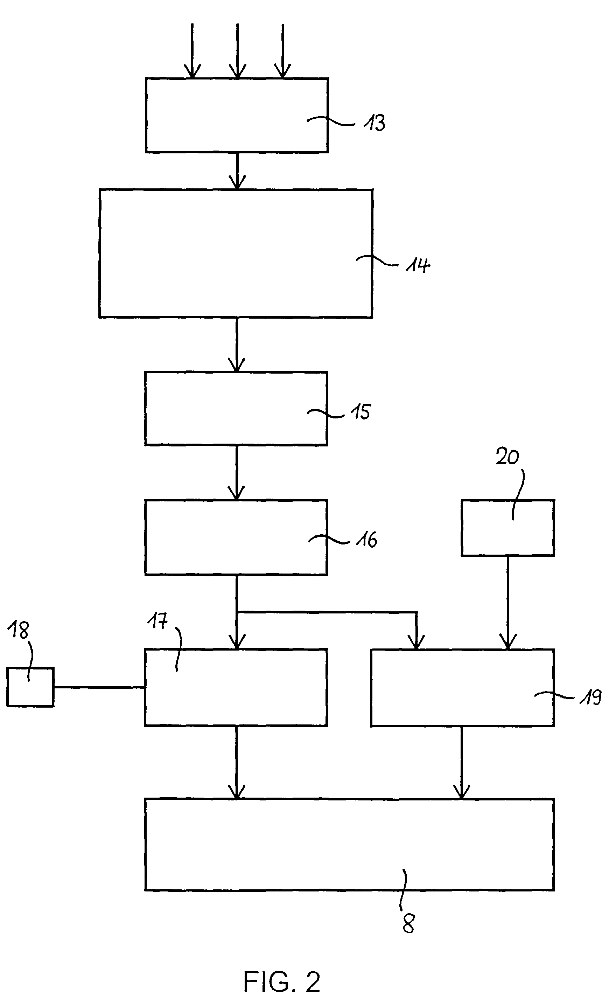

Figur 2 zeigt einen Ablaufplan, der in der Steuereinrichtung 5 realisiert ist und mittels dessen entsprechend der Quantität wenigstens dieses erfaßten Leitbestandteiles des verfeuerten Gases die Vorsteuerwerte rechnerisch oder anhand abgespeicherter Kennfelder fortlaufend optimiert werden. Die Ausgangssignale des Gassensors 2, des Temperatursensors 3 und des Drucksensors 4 werden einer Signalaufbereitung 13 unterzogen, das heißt, die Ausgangssignale der genannten Sensoren werden beispielsweise gefiltert, nomiert und können auch einer Analog-Digital-Wandlung unterzogen werden. Die Sensoren können auch über eine Datenleitung (Bus) mit der Steuereinrichtung 5 und gegebenenfalls weiterer Steuereinrichtungen verbunden sein. In Abhängigkeit dieser Signale wird aus einem Kennfeld 14 (mindestens zweidimensional, denkbar auch mehrdimensional) oder aus mehreren Kennfeldern die Zusammensetzung des Gases in dem Tank 1 ermittelt und diese Zusammensetzung in einem weiteren Schritt 14 gewichtet, wobei hier auch eine Korrektur in Abhängigkeit eines Umgebungsparameters oder mehrerer Umgebungsparameter stattfinden kann. Aus der ermittelten Zusammensetzung des zu verfeuernden Gases wird in einer Brennwertermittlung 16 zunächst dessen Brennwert errechnet, wobei in dem Schritt 16 auch denkbar ist, daß der Brennwert anhand abgespeicherter Kennfelder bestimmt wird. Der in der Brennwertermittlung 16 ermittelte Brennwert fließt dann in die Einspritzzeitberechnung und/oder in die Zündzeitpunktberechnung ein, wobei einmal aus einem Kennfeld 17 in Abhängigkeit zumindest des ermittelten Brennwertes eine Einspritzzeit berechnet wird. Die in einem Schritt 18 ermittelte Grundeinspritzzeit, die beispielsweise abhängig ist von der Drehzahl und der Last der Brennkraftmaschine, wird dann korrigiert von der in dem Kennfeld 17 ermittelten Einspritzzeit, so daß in diesem Schritt 17 eine Vorsteuerwertekorrektur ausgeführt wird, mit der dann die Einspritzeinrichtung 8 angesteuert wird. Gleiches gilt für ein Kennfeld 19, das die Ermittlung des Zündzeitpunktes beinhaltet, wobei der Zündzeitpunkt zunächst in Form eines Grundzündzeitpunktes 20 insbesondere auch in Abhängigkeit von der Last und der Drehzahl der Brennkraftmaschine erfaßt wird und dann von dem aus dem Kennfeld 19 ausgelesenen Wert für den Zündzeitpunkt korrigiert wird (Vorsteuerwertekorrektur für den Zündzeitpunkt). Der so in Abhängigkeit zumindest von dem Ausgangssignal des Gassensors 2 ermittelte Zündzeitpunkt dient ebenfalls zur Ansteuerung der Einspritzeinrichtung 8.

Bisher wurde davon ausgegangen, daß in dem Tank 1 ein einziger Gassensor 2 vorhanden ist, der zumindest einen Bestandteil des im Tank 1 enthaltenen Gases ermittelt. Denkbar ist auch, daß der Gassensor 2 zur Ermittlung mehrerer Bestandteile des Gases ausgebildet ist, wobei auch denkbar ist, daß für mehrere Bestandteile oder für jeden Bestandteil des Gases ein einzelner Gassensor vorhanden ist, so daß letztendlich der Brennwert des Gases als Summe der stoffmengenbezogenen Brennwerte der einzelnen Gasanteile ermittelt wird. Der Temperatursensor 3 und der Drucksensor 4 dienen insbesondere dazu, daß die Temperatur und der Druck im Tank 1 erfaßt werden und mit diesen Werten der Brennwert des Gases im Tank 1 auf Normbedingungen zurückgerechnet wird.

### Bezugszeichenliste:

- 1.: Tank
- 2.: Gassensor
- 3.: Temperatursensor
- 4.: Drucksensor
- 5.: Steuereinrichtung
- 6.: weitere Eingänge
- 7.: weitere Eingänge
- 8.: Einspritzeinrichtung
- 9.: Absperrventil
- 10.: Verbindungsleitung
- 11.: Verbindungsleitung
- 12.: Befüllungsleitung
- 13.: Signalaufbereitung
- 14.: Kennfeld
- 15.: Wichtung
- 16.: Brennwertermittlung
- 17.: Kennfeld Einspritzzeit (Vorsteuerwertekorrektur)
- 18.: Ermittlung Grundeinspritzzeit
- 19.: Kennfeld Zündzeitpunkt (Vorsteuerwertekorrektur)
- 20: . Ermittlung Grundzündzeitpunkt

## Patentansprüche

1. Verfahren zur Korrektur von Vorsteuerwerten bei einer gasbetriebenen Brennkraftmaschine, zum Beispiel für deren Zündung und Einspritzanlage, in Abhängigkeit von der Zusammensetzung des verfeuerten Gases, dadurch gekennzeichnet, daß mit Hilfe wenigstens eines Sensor insbesondere auf Halbleiterbasis wenigstens ein Leitbestandteil des verfeuerten Gases kontinuierlich quantitativ erfaßt wird und entsprechend der Quantität wenigstens dieses Leitbestandteils die Vorsteuerwerte rechnerisch oder anhand abgespeicherter Kennfelder fortlaufend optimiert werden.

2. Verfahren nach Anspruch 1, dadurch gekennzeichnet, daß der Sensor beziehungsweise die Sensoren im Gastank angeordnet werden.

3. Verfahren nach Anspruch 1 oder 2, dadurch gekennzeichnet, daß der Sensor beziehungsweise die Sensoren beheizt werden.

4. Verfahren nach einem der Ansprüche 1 bis 3, dadurch gekennzeichnet, daß wenigstens der Methangasanteil bestimmt wird.

5. Verfahren nach Anspruch 4, dadurch gekennzeichnet, daR neben dem Methangasanteil weitere Gasanteile, zum Beispiel von Ethan, Propan und/oder weiteren Bestandteilen, erfaßt werden.

6. Verfahren nach einem der vorhergehenden Ansprüche, dadurch gekennzeichnet, daß Kennfelder für die Vorsteuerwerte bei bestimmten Gasanteilen abgespeichert werden und ggf. bei davon abweichenden, ermittelten Gasanteilen die Vorsteuerwerte durch Interpolation aus den abgespeicherten Werten ermittelt werden.

7. Verfahren nach einem der vorhergehenden Ansprüche, dadurch gekennzeichnet, daß aus der ermittelten Zusammensetzung des zu verfeuernden Gases zunächst dessen Brennwert errechnet oder anhand abgespeicherter Kennfelder bestimmt wird und die Vorsteuerwerte der Maschine entsprechend dem ermittelten Brennwert rechnerisch oder anhand abgespeicherter Kennfelder optimiert werden.

8. Verfahren nach Anspruch 7, dadurch gekennzeichnet, daß der Brennwert des Gases als Summe der stoffmengenbezogenen Brennwerte der einzelnen Gasanteile ermittelt wird.

9. Verfahren nach Anspruch 7 oder 8, dadurch gekennzeichnet, daß die Temperatur und der Druck im Tank erfaßt werden und mit diesen Werten der Brennwert des Gases im Tank auf Normbedingungen zurückgerechnet wird.
